# EUROPEAN PATENT APPLICATION

(11) **EP 4 718 064 A1**
(43) Date of publication of application: **01.04.2026**
(21) Application number: 23955089.0
(22) Date of filing: 10.10.2023
(51) Int. Cl.: G01N 21/88, G01N 21/958, G01N 21/01, G06V 10/82

(54) **PLASTIC SEALING QUALITY INSPECTION SYSTEM AND METHOD FOR TRANSPARENT SUBSTRATE, DEVICE, MEDIUM, AND CHIP**

(71) Applicant: China Banknote Printing and Minting Corporation, Beijing 100044 (CN); Shijiazhuang Banknote Printing Co., Ltd., Shijiazhuang, Hebei 050000 (CN)
(72) Inventor: HAO, Yunxue, Beijing 100044 (CN); WEI, Jun, Beijing 100044 (CN); LI, Jun, Beijing 100044 (CN); CHENG, Zhe, Beijing 100044 (CN)
(74) Representative: DREISS Patentanwälte PartG mbB
(86) International application number: PCT/CN2023/123838
(87) International publication number: WO 2025/076701

(57) **Abstract**

The present application relates to the technical field of plastic sealing quality inspection, and provides a plastic sealing quality inspection system and method for a transparent substrate, a device, a medium, and a chip. The system comprises: a clamping module used for clamping an item to be inspected; a light source module; an image acquisition module used for acquiring image information of surfaces to be inspected; a conveying module that conveys the item to be inspected to a boxing module by means of a first conveying channel, or conveys said item to a thermoplastic sealing module by means of a second conveying channel; and a control module comprising an image processing module that determines, on the basis of the image information, a maximum value image, a minimum value image, and a difference image of each surface to be inspected. The image processing module determines a neural network model and determines whether a defect is present on said surface. If a defect is present on said surface, the area and coordinates of the region are determined, and if no defect is present on said surface, the item to be inspected is conveyed to the boxing module. The image processing module determines whether the area of the region exceeds a first threshold. If the area of the region exceeds the first threshold, the item to be inspected is conveyed to the thermoplastic sealing module, and if the area of the region does not exceed the first threshold, said item is conveyed to the boxing module.

## Description

### FIELD

The present application relates to the technical field of plastic sealing quality inspection, and specifically relates to a plastic sealing quality inspection system and method for transparent substrate, a device, a medium, and a chip.

### BACKGROUND

In a banknote production line, a transparent plastic film is needed to perform thermoplastic sealing on products. The plastic sealing quality inspection on the products subjected to thermoplastic sealing is performed manually. Workers conduct six-side check on the products one by one, and then the products enter a next process (boxing) or are unsealed for thermoplastic sealing again. This plastic sealing quality inspection method depends highly on manual labor, and then results in low work efficiency, and fails to meet the requirements of automated production.

### SUMMARY

To solve or improve the technical problem in the related art that the plastic sealing quality inspection method depends highly on manual labor, and then results in low work efficiency, a purpose of the present application is to provide a plastic sealing quality inspection system for a transparent substrate.

Another purpose of the present application is to provide a plastic sealing quality inspection method for a transparent substrate.

Another purpose of the present application is to provide an electronic device.

Another purpose of the present application is to provide a computer-readable storage medium.

Another purpose of the present application is to provide a chip.

In order to achieve the above purposes, a first aspect of the present application provides a plastic sealing quality inspection system for a transparent substrate for inspecting an item to be inspected, wherein the item to be inspected has a plurality of surfaces to be inspected, and the plastic sealing quality inspection system for a transparent substrate comprises: a clamping module for clamping an item to be inspected to enable the item to be inspected to rotate and/or lift; a light source module for emitting light to the surfaces to be inspected; an image acquisition module for acquiring image information of the surfaces to be inspected; a conveying module comprising a first conveying channel and a second conveying channel, wherein the first conveying channel is for connecting a boxing module, and the second conveying channel is for connecting a thermoplastic sealing module, the conveying module can convey the item to be inspected to the boxing module through the first conveying channel, or the conveying module can convey the item to be inspected to the thermoplastic sealing module through the second conveying channel; a control module connected to the clamping module, the light source module, the image acquisition module, and the conveying module, wherein the control module comprises an image processing module for receiving the image information, and the image processing module determines, on the basis of the image information, a maximum value image and a minimum value image of each surface to be inspected, then the image processing module determines a difference image based on the maximum value image and the minimum value image, the image processing module determines a neural network model, the image processing module determines whether a defect is present on the surface to be inspected based on the neural network model, the maximum value image, the minimum value image and the difference image and generates a first determination result; the defects comprise protrusions, and/or wrinkles, and/or damage; if the first determination result is positive, the image processing module determines the area and coordinates of a region; if the first determination result is negative, the control module controls the conveying module to convey the item to be inspected to the boxing module through the first conveying channel; the image processing module further determines whether the area of the region exceeds a first threshold and generates a second determination result; if the second determination result is positive, the control module controls the conveying module to convey the item to be inspected to the thermoplastic sealing module through the second conveying channel; if the second determination result is negative, the control module controls the conveying module to convey the item to be inspected to the boxing module through the first conveying channel.

According to the technical solution of the plastic sealing quality inspection system for a transparent substrate provided by the present application, the plastic sealing quality inspection system for a transparent substrate can replace manual online operation, transform manual on-site monitoring into manual sampling inspection and fault handling. It has low dependence on manual labor, which helps save labor costs and improve work efficiency. In addition, the plastic sealing quality inspection system for a transparent substrate has a high degree of automation and can meet the requirements of automated production.

The item to be inspected is a thermoplastically sealed security. Securities refer to vouchers marked with a face value that serve to prove that the holder or the specific entity designated by the securities has ownership or creditor's rights to specific property. The plastic sealing quality inspection system for a transparent substrate is configured to inspect the item to be inspected and then to determine whether the plastic sealing quality of the item to be inspected is qualified. If the plastic sealing quality is qualified, the item to be inspected enters a boxing device or the boxing module to proceed with the next process (boxing); if the plastic sealing quality is unqualified, the item to be inspected re-enters a thermoplastic sealing device or the thermoplastic sealing module for thermoplastic sealing again.

Specifically, the plastic sealing quality inspection system for a transparent substrate comprises a clamping module, a light source module, an image acquisition module, a conveying module, and a control module. Wherein, the clamping module is configured to clamp an item to be inspected to enable the item to be inspected to rotate and/or lift. The item to be inspected has a plurality of surfaces to be inspected. Optionally, the item to be inspected is a cuboid with six surfaces to be inspected. Optionally, the item to be inspected can be rotated by the clamping module. Optionally, the item to be inspected can be lifted by the clamping module. Before the clamping module clamps the item to be inspected, the item to be inspected flows out after passing the thermoplastic sealing module of the previous process and stays on a roller ramp. Optionally, the plastic sealing quality inspection system for a transparent substrate comprises a first inspection station and a second inspection station, and the item to be inspected passes the first inspection station and the second inspection station in sequence. After it is confirmed that there is not any item to be inspected at the first inspection station, a new item to be inspected is pushed to the first inspection station. Optionally, the clamping module is a clamping mechanism with a spring retraction structure. This design method, firstly, can adapt to items to be inspected of different sizes, expanding the application range; secondly, it can achieve elastic clamping to prevent a plastic sealing film from being damaged due to forced clamping.

Furthermore, the light source module is configured to emit light to the surfaces to be inspected. Optionally, the light source module is an arc-shaped light source. The light source module has a plurality of light-emitting areas, which emit light to the surfaces to be inspected in sequence, and the number of the light-emitting areas is a first numeric value. By configuring the light source module as an arc-shaped light source, compared with linear light sources or point light sources, each light-emitting area has a certain curvature, so the emitted light is more conducive to acquiring and inspecting images by the image acquisition module.

Furthermore, the image acquisition module is configured to obtain image information of the surfaces to be inspected. Optionally, when each light-emitting area emits light to the surfaces to be inspected, the image acquisition module acquires the inspection image of one surface to be inspected. The image information comprises a plurality of inspection images. The number of inspection images is a first numeric value and consistent with the number of light-emitting areas. The plurality of light-emitting areas emit light to the surfaces to be inspected in sequence, and there are subtle differences between the inspection images acquired by the image acquisition module when each light-emitting area emits light to a surface to be inspected. By analyzing the plurality of inspection images, whether protrusions, and/or wrinkles, and/or damage are present on the surface to be inspected can be determined, to determine whether the plastic sealing quality of the item to be inspected is qualified. Optionally, the image acquisition module is a camera and/or a video camera. In the technical solution defined in the present application, considering the characteristics of the outer package of the transparent substrate, a light source module and an image acquisition module are customized to complete the acquisition of image information. In addition, the clamping module can cooperate with an automatic control platform to realize the automatic rotation and lifting of the item to be inspected, to assist the image acquisition module in acquiring the image information of the plurality of surfaces to be inspected.

Optionally, the first numeric value is 14. The light source module comprises 14 light-emitting areas, and the image acquisition module acquires 14 inspection images for each surface to be inspected.

Optionally, the item to be inspected comprises a first surface and a second surface oppositely disposed in a first direction; the item to be inspected comprises a third surface and a fifth surface oppositely disposed in a second direction; the item to be inspected comprises a fourth surface and a sixth surface oppositely disposed in a third direction. The first direction is perpendicular to the second direction, the first direction is perpendicular to the third direction, and the second direction is perpendicular to the third direction. Optionally, the process for the image acquisition module to obtain image information of the six surfaces to be inspected is as follows: the item to be inspected first enters the first inspection station, and the clamping module clamps the first surface and the second surface of the item to be inspected; the item to be inspected is lifted by the clamping module; the image acquisition module obtains the image information of the third surface; the item to be inspected is rotated 90 degrees around a first normal line and lowered by the clamping module; the image acquisition module obtains the image information of the fourth surface; the item to be inspected is rotated 90 degrees around the first normal line and rises by the clamping module; the image acquisition module obtains the image information of the fifth surface; the item to be inspected is rotated 90 degrees around the first normal line and lowered by the clamping module; the image acquisition module obtains the image information of the sixth surface; the item to be inspected is rotated 90 degrees around the first normal line and lowered by the clamping module; the item to be inspected enters the second inspection station from the first inspection station; the item to be inspected is rotated 90 degrees around a second normal line; the item to be inspected rises and is rotated 90 degrees around the first normal line by the clamping module; the image acquisition module obtains the image information of the first surface; the item to be inspected is rotated 180 degrees around the first normal line by the clamping module; the image acquisition module obtains the image information of the second surface; and the item to be inspected is rotated 90 degrees around the second normal line to restore its original posture.

Furthermore, the conveying module comprises the first conveying channel and the second conveying channel. The first conveying channel is for connecting the boxing module; the second conveying channel is for connecting the thermoplastic sealing module. The conveying module can convey the item to be inspected to the boxing module through the first conveying channel, or the conveying module can convey the item to be inspected to the thermoplastic sealing module through the second conveying channel. If the plastic sealing quality of the item to be inspected has defects that are unacceptable, the item to be inspected enters a buffer channel (the second conveying channel), and after being unsealed, it re-enters the thermoplastic sealing module; if the plastic sealing quality of the item to be inspected does not have any defect or has an acceptable defect, it enters the boxing module through the first conveying channel to proceed with the next process (boxing).

Furthermore, the control module is connected to the clamping module, and the control module is configured to control the clamping module to clamp the item to be inspected to perform actions (rotating and/or lifting). Furthermore, the control module is connected to the light source module, and the control module is configured to control the turning on and off of the light source module. Furthermore, the control module is connected to the image acquisition module and is configured to receive the image information and perform information processing. Furthermore, the control module is connected to the conveying module, and the control module is configured to control the conveying module to convey the item to be inspected to the boxing module or the thermoplastic sealing module.

Furthermore, the image processing module is configured to receive image information. The image processing module determines the maximum value image and the minimum value image of each surface to be inspected based on the image information. Optionally, the maximum value image of the surface to be inspected refers to the brightest area when the light-emitting area is activated, and the minimum value image of the surface to be inspected refers to the image of the plastic sealing film under diffuse reflection. Within the same area of the surface to be inspected, the reflective brightness when there is a defect is different from the reflective brightness when there is not any defect. Furthermore, the image processing module determines a difference image according to the maximum value image and the minimum value image. The difference image is obtained by subtracting the minimum value image from the maximum value image, to eliminate the image disturbed by information such as barcodes and intaglio printing. Furthermore, the image processing module determines the neural network model. Based on the neural network model, the maximum value image, the minimum value image and the difference image, the image processing module determines whether there is a defect on the surface to be inspected and generates a first determination result. The defects comprise protrusions, and/or wrinkles, and/or damage. In other words, the defects comprise one or a combination of at least two of them. If the first determination result is positive (defects are present on the surface to be inspected), the image processing module determines the area and coordinates of the region to help the operator timely review. If the first determination result is negative (there is not any defect on the surface to be inspected), the control module controls the conveying module to convey the item to be inspected to the boxing module via the first conveying channel to proceed with the next process (boxing).

Optionally, the neural network model is a YOLO (You Only Look Once) neural network model. Substituting the maximum value image, the minimum value image, and the difference image into the neural network model enables accurate location of the position and size of the defects. The image processing module employs a plurality of inspection algorithms, comprising a high-low value inspection algorithm and a neural network inspection algorithm. The high-low value inspection algorithm requires generating a standard high-value template and a low-value template for the maximum value image, the minimum value image, and the difference image of each surface to be inspected. The current inspection image is compared with the high-value template and the low-value template respectively, and if it exceeds a range, a defect is determined, and the position and size of the defect are counted according to a set statistical rule. The neural network inspection algorithm annotates and trains images of different defect areas. During inspection, segmentation is performed based on the trained neural network model to obtain the area and coordinates of the defective region.

Furthermore, the image processing module determines whether the area of the region exceeds a first threshold and generates a second determination result. The image processing module compares the area of the defective region with the first threshold to determine if the defect is within an acceptable range. If the second determination result is positive (the area of the defective region is greater than the first threshold), the control module controls the conveying module to convey the item to be inspected to the thermoplastic sealing module through the second conveying channel, to perform thermoplastic sealing on the item to be inspected again; if the second determination result is negative (the area of the defective region is not greater than the first threshold), the control module controls the conveying module to convey the item to be inspected to the boxing module through the first conveying channel to proceed with the next process (boxing).

Optionally, the plastic sealing quality inspection system for a transparent substrate and an integrated inspection and sealing production line adopt a dual-channel control (they adopt different control modules respectively), realizing seamless connection between the plastic sealing quality inspection and automatic operation of the production line. In addition, information interchange can be achieved between the plastic sealing quality inspection system for a transparent substrate and the integrated inspection and sealing production line.

In the technical solution defined in the present application, the plastic sealing quality inspection system for a transparent substrate can replace manual online operation, transform manual on-site monitoring into manual sampling inspection and fault handling. It has low dependence on manual labor, which helps save labor costs and improve work efficiency. In addition, the plastic sealing quality inspection system for a transparent substrate has a high degree of automation and can meet the requirements of automated production.

In addition, the above technical solution provided by the present application can further comprise the following additional technical features.

In some technical solutions, optionally, the light source module is an arc-shaped light source. The light source module has a plurality of light-emitting areas, which emit light to the surfaces to be inspected in sequence, and the number of the light-emitting areas is a first numeric value.

In the technical solution, by configuring the light source module as an arc-shaped light source, compared with linear light sources or point light sources, each light-emitting area has a certain curvature, so the emitted light is more conducive to acquiring and inspecting images by the image acquisition module. Optionally, the first numeric value is 14, i.e., the light source module comprises 14 light-emitting areas.

In some technical solutions, optionally, when each light-emitting area emits light to a surface to be inspected, the image acquisition module acquires the inspection image of one surface to be inspected. The image information comprises a plurality of inspection images. The number of inspection images is a first numeric value.

In the technical solution, the number of inspection images is consistent with the number of light-emitting areas. The plurality of light-emitting areas emit light to the surfaces to be inspected in sequence, and there are subtle differences between the inspection images acquired by the image acquisition module when each light-emitting area emits light to a surface to be inspected. By analyzing the plurality of inspection images, whether protrusions, and/or wrinkles, and/or damage are present on the surface to be inspected can be determined, to determine whether the plastic sealing quality of the item to be inspected is qualified.

In some technical solutions, optionally, the item to be inspected is a cuboid with six surfaces to be inspected.

In the technical solution, through the mutual cooperation of the clamping module, the light source module, and the image acquisition module, image information acquisition is sequentially performed on the plurality of surfaces to be inspected. Compared with the method for manually performing a six-side check on each item to be inspected one by one, this plastic sealing quality inspection method helps save labor costs, improve work efficiency, and can further meet the requirements of automated production.

In some technical solutions, optionally, the plastic sealing quality inspection system for a transparent substrate further comprises a frame body connected to the clamping module, the light source module, the image acquisition module, the conveying module, and the control module.

In the technical solution, the plastic sealing quality inspection system for a transparent substrate further comprises the frame body. Specifically, the frame body is connected to the clamping module, the light source module, the image acquisition module, the conveying module, and the control module. For the clamping module, the light source module, the image acquisition module, the conveying module, and the control module, the frame body mainly serves a function of a supporting and mounting carrier.

In some technical solutions, optionally, the boxing module is for boxing a plurality of items to be inspected.

In the technical solution, in the case that the plastic sealing quality of the item to be inspected does not have any defect or has an acceptable defect, the item to be inspected enters the boxing module through the first conveying channel to proceed with the next process (boxing).

In some technical solutions, optionally, the thermoplastic sealing module is for performing thermoplastic sealing on the items to be inspected.

In the technical solution, in the case that the plastic sealing quality of the item to be inspected has defects that are unacceptable, the item to be inspected enters a buffer channel (the second conveying channel), and after being unsealed, it re-enters the thermoplastic sealing module.

In some technical solutions, optionally, the number of clamping modules is at least two.

In the technical solution, the plastic sealing quality inspection system for a transparent substrate comprises at least two inspection stations. By configuring at least two clamping modules, the item to be inspected can complete rotating and lifting actions while passing different inspection stations sequentially, to cooperate with the image acquisition module in acquiring image information for the plurality of surfaces to be inspected.

The second aspect of the present application provides a plastic sealing quality inspection method for a transparent substrate, which is applied to the control module of the plastic sealing quality inspection system for a transparent substrate in any one of the above technical solutions and is for inspecting the item to be inspected. The plastic sealing quality inspection method for a transparent substrate comprises: acquiring image information of a plurality of surfaces to be inspected of an item to be inspected; determining, on the basis of the image information, a maximum value image and a minimum value image of each surface to be inspected; determining a difference image based on the maximum value image and the minimum value image; determining a neural network model; determining whether a defect is present on the surface to be inspected based on the neural network model, the maximum value image, the minimum value image and the difference image and generating a first determination result, wherein the defects comprise protrusions, and/or wrinkles, and/or damage; if the first determination result is positive, the image processing module determines the area and coordinates of a region; if the first determination result is negative, the control module controls the conveying module to convey the item to be inspected to the boxing module through the first conveying channel; determining whether the area of the region exceeds a first threshold and generating a second determination result; if the second determination result is positive, the control module controls the conveying module to convey the item to be inspected to the thermoplastic sealing module through the second conveying channel; if the second determination result is negative, the control module controls the conveying module to convey the item to be inspected to the boxing module through the first conveying channel.

According to the technical solution of the plastic sealing quality inspection method for a transparent substrate of the present application, the plastic sealing quality inspection method for a transparent substrate is applied to the control module of the plastic sealing quality inspection system for a transparent substrate in any one of the above technical solutions, and the plastic sealing quality inspection method for a transparent substrate is for performing inspection on the item to be inspected. The specific steps of the plastic sealing quality inspection method for a transparent substrate comprises:

Step 1,acquiring image information of a plurality of surfaces to be inspected of an item to be inspected. The image information comprises a plurality of inspection images. The plurality of light-emitting areas emit light to the surfaces to be inspected in sequence, and there are subtle differences between the inspection images acquired by the image acquisition module when each light-emitting area emits light to the surfaces to be inspected. By analyzing the plurality of inspection images, whether protrusions, and/or wrinkles, and/or damage are present on the surfaces to be inspected can be determined, to determine whether the plastic sealing quality of the item to be inspected is qualified.

Step 2, determining the maximum value image and minimum value image of each surface to be inspected based on the image information. The maximum value image of the surface to be inspected is the brightest area when the light-emitting area is activated. The minimum value image of the surface to be inspected is the image of the plastic sealing film under diffuse reflection. Within the same area of the surface to be inspected, the reflective brightness when there is a defect is different from the reflective brightness when there is not any defect.

Step 3, determining a difference image according to the maximum value image and the minimum value image. The difference image is obtained by subtracting the minimum value image from the maximum value image, to eliminate the image disturbed by information such as barcodes and intaglio printing.

Step 4, determining a neural network model. The neural network model is a YOLO (You Only Look Once) neural network model. Substituting the maximum value image, the minimum value image, and the difference image into the neural network model enables accurate location of the position and size of the defects. The image processing module employs a plurality of inspection algorithms, comprising a high-low value inspection algorithm and a neural network inspection algorithm. The high-low value inspection algorithm requires generating a standard high-value template and a low-value template for the maximum value image, the minimum value image, and the difference image of each surface to be inspected. The current inspection image is compared with the high-value template and the low-value template respectively, and if it exceeds a range, a defect is determined, and the position and size of the defect are counted according to a set statistical rule. The neural network inspection algorithm annotates and trains images of different defect areas. During inspection, segmentation is performed based on the trained neural network model to obtain the area and coordinates of the defective region.

Step 5, determining whether there is a defect on the surface to be inspected and generating a first determination result, based on the neural network model, the maximum value image, the minimum value image and the difference image. The defects comprise protrusions, and/or wrinkles, and/or damage. The defects comprise one or a combination of at least two of them.

Step6, if the first determination result is positive, the image processing module determines the area and coordinates of the region; if the defects are present on the surface to be inspected, the image processing module determines the area and coordinates of the defective region to help the operator timely review.

Step 7, if the first determination result is negative, the control module controls the conveying module to convey the item to be inspected to the boxing module via the first conveying channel; if there is not any defect on the surface to be inspected, the control module controls the conveying module to convey the item to be inspected to the boxing module via the first conveying channel, to proceed with the next process (boxing).

Step 8, determining whether the area of the region exceeds a first threshold and generating a second determination result. The image processing module compares the area of the defective region with the first threshold to determine if the defect is within an acceptable range.

Step 9,if the second determination result is positive, the control module controls the conveying module to convey the item to be inspected to the thermoplastic sealing module through the second conveying channel; if the area of the defective region is greater than the first threshold, the control module controls the conveying module to convey the item to be inspected to the thermoplastic sealing module through the second conveying channel, to perform thermoplastic sealing on the item to be inspected again.

Step 10, if the second determination result is negative, the control module controls the conveying module to convey the item to be inspected to the boxing module through the first conveying channel; if the area of the defective region is not greater than the first threshold, the control module controls the conveying module to convey the item to be inspected to the boxing module through the first conveying channel, to proceed with the next process (boxing).

In the technical solution defined by the present application, in the process of conducting plastic sealing quality inspection for an item to be inspected, it has low dependence on manual labor, which helps save labor costs and improve work efficiency, and can meet the requirements of automated production.

The third aspect of the present application provides an electronic device, comprising a processor, a memory, and programs or instructions which are stored in the memory and can run in the processor. When the programs or instructions are executed by the processor, the steps of the plastic sealing quality inspection method for a transparent substrate in the technical solution described above are realized.

The fourth aspect of the present application provides a computer-readable storage medium, and computer programs are stored in the computer-readable storage medium. When the computer programs are executed by a processor, the steps of the plastic sealing quality inspection method for a transparent substrate in the technical solution described above are realized.

The fifth aspect of the present application provides a chip, and the chip comprises a processor and a communication interface, the communication interface is coupled to the processor, and the processor is configured to execute programs or instructions to realize the steps of the plastic sealing quality inspection method for a transparent substrate in the above technical solutions.

The additional aspects and advantages of the present application will become apparent in the following description or may be learned through practice of the present application.

### BRIEF DESCRIPTION OF THE DRAWINGS

FIG. 1 is a first schematic view of a plastic sealing quality inspection system for a transparent substrate according to an embodiment of the present application;
FIG. 2 is a second schematic view of a plastic sealing quality inspection system for a transparent substrate according to an embodiment of the present application;
FIG. 3 is a schematic view of a light source module according to an embodiment of the present application;
FIG. 4 is a schematic view of an item to be inspected according to an embodiment of the present application; and
FIG. 5 is a flow chart of a plastic sealing quality inspection method for a transparent substrate according to an embodiment of the present application.

The reference signs are as follows:
100 plastic sealing quality inspection system for a transparent substrate; 110 clamping module; 120 light source module; 121 light-emitting area; 130 image acquisition module; 140 conveying module; 141 first conveying channel; 142 second conveying channel; 150 control module; 151 image processing module; 160 frame body; 210 item to be inspected; 211 surface to be inspected; 212 first surface; 213 second surface; 214 third surface; 215 fourth surface; 216 fifth surface; 217 sixth surface; 220 boxing module; 230 thermoplastic sealing module; *a:* first direction; b: second direction; c: third direction.

### DETAILED DESCRIPTION OF THE APPLICATION

For a clearer understanding of the above purposes, features and advantages of the embodiments of the present application, the embodiments of the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the embodiments of the present application can further be implemented using other embodiments other than these described herein. Therefore, the protection scope of the present application is not limited to the specific embodiments disclosed in the following text.

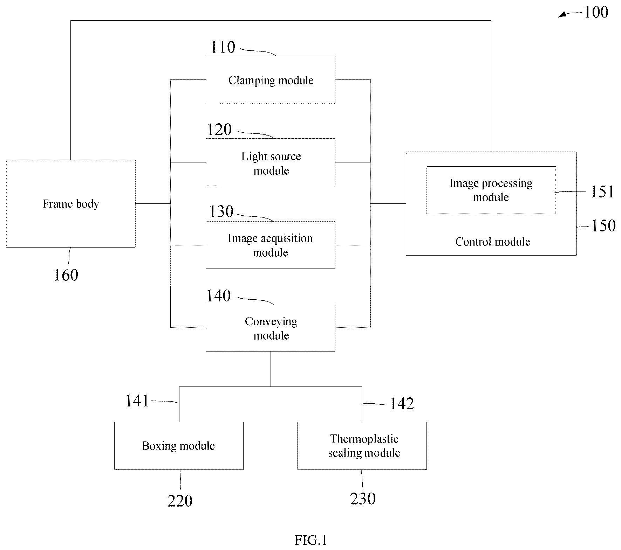

With reference to FIGS. 1 to 5, a plastic sealing quality inspection system 100 for a transparent substrate, a plastic sealing quality inspection method for a transparent substrate, an electronic device, a computer-readable storage medium, and a chip according to some embodiments of the present application are described below.

The item 210 to be inspected is a thermoplastically sealed security. Securities refer to vouchers marked with a face value that serve to prove that the holder or the specific entity designated by the securities has ownership or creditor's rights to specific property. The plastic sealing quality inspection system 100 for a transparent substrate is configured to inspect the item 210 to be inspected and then to determine whether the plastic sealing quality of the item 210 to be inspected is qualified. If the plastic sealing quality is qualified, the item 210 to be inspected enters a boxing device or the boxing module 220 to proceed with the next process (boxing); if the plastic sealing quality is unqualified, the item 210 to be inspected re-enters a thermoplastic sealing device or the thermoplastic sealing module 230 for thermoplastic sealing again.

In an embodiment of the present application, as shown in FIG. 1, the plastic sealing quality inspection system 100 for a transparent substrate comprises a clamping module 110, a light source module 120, an image acquisition module 130, a conveying module 140, and a control module 150. Wherein, the clamping module 110 is configured to clamp an item 210 to be inspected to enable the item 210 to be inspected to rotate and/or lift. The item 210 to be inspected has a plurality of surfaces 211 to be inspected. Optionally, the item 210 to be inspected is a cuboid with six surfaces 211 to be inspected. Optionally, the item 210 to be inspected can be rotated by the clamping module 110. Optionally, the item 210 to be inspected can be lifted by the clamping module 110. Before the clamping module 110 clamps the item 210 to be inspected, the item 210 to be inspected flows out after passing the thermoplastic sealing module 230 of the previous process and stays on a roller ramp. Optionally, the plastic sealing quality inspection system 100 for a transparent substrate comprises a first inspection station and a second inspection station, and the item 210 to be inspected passes the first inspection station and the second inspection station in sequence. After it is confirmed that there is not any item 210 to be inspected at the first inspection station, a new item 210 to be inspected is pushed to the first inspection station. Optionally, the clamping module 110 is a clamping mechanism with a spring retraction structure. This design method, firstly, can adapt to items 210 to be inspected of different sizes, expanding the application range; secondly, it can achieve elastic clamping to prevent a plastic sealing film from being damaged due to forced clamping.

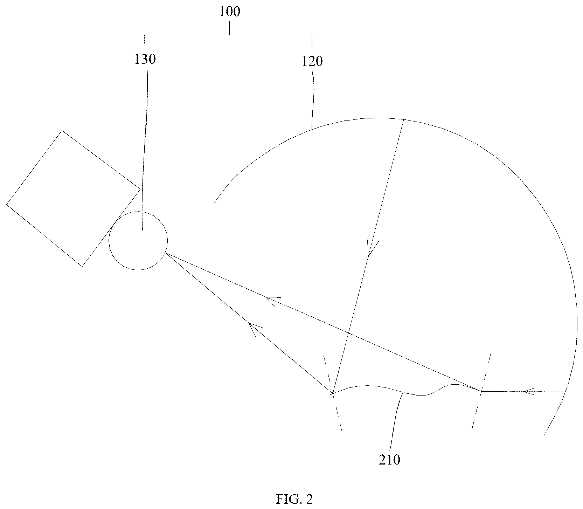

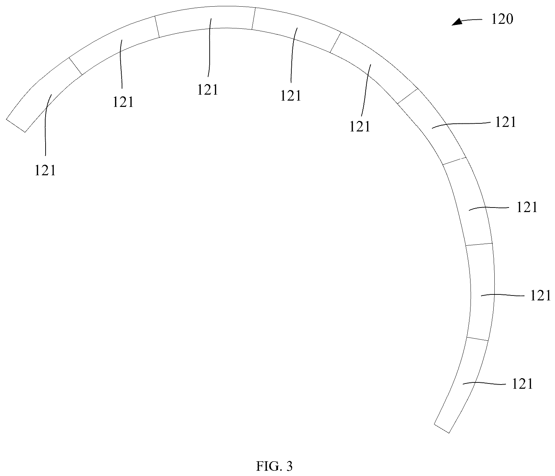

Furthermore, the light source module 120 is configured to emit light to the surfaces 211 to be inspected. Optionally, as shown in FIG. 2 and FIG. 3, the light source module 120 is an arc-shaped light source. The light source module 120 has a plurality of light-emitting areas 121, which emit light to the surfaces 211 to be inspected in sequence, and the number of the light-emitting areas 121 is a first numeric value. By configuring the light source module 120 as an arc-shaped light source, compared with linear light sources or point light sources, each light-emitting area 121 has a certain curvature, so the emitted light is more conducive to acquiring and inspecting images by the image acquisition module 130.

Furthermore, the image acquisition module 130 is configured to obtain image information of the surfaces 211 to be inspected. Optionally, when each light-emitting area 121 emits light to the surfaces 211 to be inspected, the image acquisition module 130acquires the inspection image of one surface 211 to be inspected. The image information comprises a plurality of inspection images. The number of inspection images is a first numeric value and consistent with the number of light-emitting areas 121. The plurality of light-emitting areas 121 emit light to the surfaces 211 to be inspected in sequence, and there are subtle differences between the inspection images acquired by the image acquisition module 130when each light-emitting area 121 emits light to a surface 211 to be inspected. By analyzing the plurality of inspection images, whether protrusions, and/or wrinkles, and/or damage are present on the surface 211 to be inspected can be determined, to determine whether the plastic sealing quality of the item 210 to be inspected is qualified. Optionally, the image acquisition module 130 is a camera and/or a video camera. In the technical solution defined in the present application, considering the characteristics of the outer package of the transparent substrate, the light source module 120 and the image acquisition module 130 are customized to complete the acquisition of image information. In addition, the clamping module 110 can cooperate with an automatic control platform to realize the automatic rotation and lifting of the item 210 to be inspected, to assist the image acquisition module 130 in acquiring the image information of the plurality of surfaces 211 to be inspected.

Optionally, the first numeric value is 14. The light source module 120comprises 14 light-emitting areas 121, and the image acquisition module 130acquires 14 inspection images for each surface 211 to be inspected.

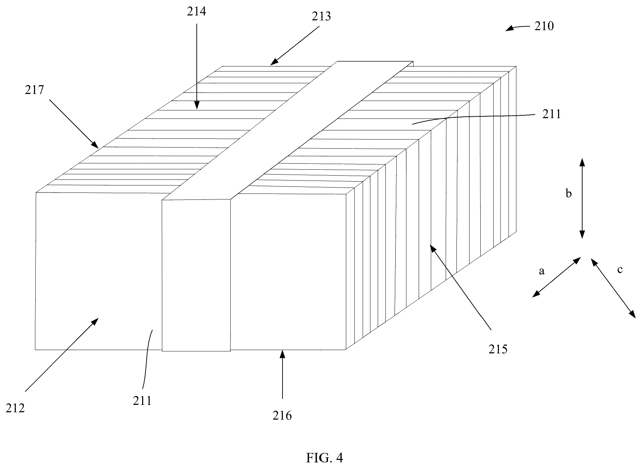

Optionally, as shown in FIG. 4, the item 210 to be inspected comprises a first surface 212 and a second surface 213 oppositely disposed in a first direction *a*; the item 210 to be inspected comprises a third surface 214 and a fifth surface 216 oppositely disposed in a second direction *b*; the item 210 to be inspected comprises a fourth surface 215 and a sixth surface 217 oppositely disposed in a third direction c. The first direction a is perpendicular to the second direction *b,* the first direction *a* is perpendicular to the third direction c, and the second direction *b* is perpendicular to the third direction c. Optionally, the process for the image acquisition module 130 to obtain image information of the six surfaces 211 to be inspected is as follows: the item 210 to be inspected first enters the first inspection station, and the clamping module 110 clamps the first surface 212 and the second surface 213 of the item 210 to be inspected; the item 210to be inspected rises by the clamping module 110; the image acquisition module 130 obtains the image information of the third surface 214; the item 210 to be inspected is rotated 90 degrees around a first normal line and lowered by the clamping module 110; the image acquisition module 130 obtains the image information of the fourth surface 215; the item 210 to be inspected is rotated 90 degrees around the first normal line and rises by the clamping module 110; the image acquisition module 130 obtains the image information of the fifth surface 216; the item 210 to be inspected is rotated 90 degrees around the first normal line and lowered by the clamping module 110;the image acquisition module 130 obtains the image information of the sixth surface 217; the item 210 to be inspected is rotated 90 degrees around the first normal line and lowered by the clamping module 110; the item 210 to be inspected enters the second inspection station from the first inspection station; the item 210 to be inspected is rotated 90 degrees around a second normal line; the item 210 to be inspected rises and is rotated 90 degrees around the first normal line by the clamping module 110; the image acquisition module 130 obtains the image information of the first surface 212; the item 210 to be inspected is rotated 180 degrees around the first normal line by the clamping module 110; the image acquisition module 130 obtains the image information of the second surface 213; and the item 210to be inspected is rotated 90 degrees around the second normal line to restore its original posture.

Furthermore, as shown in FIG. 1, the conveying module 140 comprisesthe first conveying channel 141 and the second conveying channel 142. The first conveying channel 141 is for connecting the boxing module 220; the second conveying channel 142 is for connecting the thermoplastic sealing module 230. The conveying module 140 can convey the item 210 to be inspected to the boxing module 220 through the first conveying channel 141, or the conveying module 140 can convey the item 210 to be inspected to the thermoplastic sealing module 230 through the second conveying channel 142. If the plastic sealing quality of the item 210 to be inspected has defects that are unacceptable, the item 210 to be inspected enters a buffer channel (the second conveying channel 142), and after being unsealed, it re-enters the thermoplastic sealing module 230; if the plastic sealing quality of the item 210 to be inspected does not have any defect or has an acceptable defect, it enters the boxing module 220 through the first conveying channel 141 to proceed with the next process (boxing).

Furthermore, as shown in FIG. 1, the control module 150 is connected to the clamping module 110, and the control module 150 is configured to control the clamping module 110 to clamp the item 210 to be inspected to perform actions (rotating and/or lifting). Furthermore, the control module 150 is connected to the light source module 120, and the control module 150 is configured to control the turning on and off of the light source module 120. Furthermore, the control module 150 is connected to the image acquisition module 130 and is configured to receive the image information and perform information processing. Furthermore, the control module 150 is connected to the conveying module 140, and the control module 150 is configured to control the conveying module 140 to convey the item 210 to be inspected to the boxing module 220 or the thermoplastic sealing module 230.

Furthermore, the image processing module 151 is configured to receive image information. The image processing module 151 determines the maximum value image and the minimum value image of each surface 211 to be inspected based on the image information. Optionally, the maximum value image of the surface 211 to be inspected refers to the brightest area when the light-emitting area 121 is activated, and the minimum value image of the surface 211 to be inspected refers to the image of the plastic sealing film under diffuse reflection. Within the same area of the surface 211 to be inspected, the reflective brightness when there is a defect is different from the reflective brightness when there is not any defect. Furthermore, the image processing module 151determines a difference image according to the maximum value image and the minimum value image. The difference image is obtained by subtracting the minimum value image from the maximum value image, to eliminate the image disturbed by information such as barcodes and intaglio printing. Furthermore, the image processing module 151determines the neural network model. Based on the neural network model, the maximum value image, the minimum value image and the difference image, the image processing module 151 determines whether there is a defect on the surface 211 to be inspected and generates a first determination result. The defects comprise protrusions, and/or wrinkles, and/or damage. In other words, the defects comprise one or a combination of at least two of them. If the first determination result is positive (defects are present on the surface 211 to be inspected), the image processing module 151determines the area and coordinates of the region to help the operator timely review. If the first determination result is negative (there is not any defect on the surface 211 to be inspected), the control module 150controls the conveying module 140 to convey the item 210 to be inspected to the boxing module 220 via the first conveying channel 141to proceed with the next process (boxing).

Optionally, the neural network model is a YOLO (You Only Look Once) neural network model (a deep learning neural network model). Substituting the maximum value image, the minimum value image, and the difference image into the neural network model enables accurate location of the position and size of the defects. The image processing module 151 employs a plurality of inspection algorithms, comprising a high-low value inspection algorithm and a neural network inspection algorithm. The high-low value inspection algorithm requires generating a standard high-value template and a low-value template for the maximum value image, the minimum value image, and the difference image of each surface 211 to be inspected. The current inspection image is compared with the high-value template and the low-value template respectively, and if it exceeds a range, a defect is determined, and the position and size of the defect are counted according to a set statistical rule. The neural network inspection algorithm annotates and trains images of different defect areas. During inspection, segmentation is performed based on the trained neural network model to obtain the area and coordinates of the defective region.

Furthermore, the image processing module 151 determines whether the area of the region exceeds a first threshold and generates a second determination result. The image processing module 151 compares the area of the defective region with the first threshold to determine if the defect is within an acceptable range. If the second determination result is positive (the area of the defective region is greater than the first threshold), the control module 150 controls the conveying module 140 to convey the item 210 to be inspected to the thermoplastic sealing module 230 through the second conveying channel 142, to perform thermoplastic sealing on the item 210 to be inspected again; if the second determination result is negative (the area of the defective region is not greater than the first threshold), the control module 150 controls the conveying module 140 to convey the item 210 to be inspected to the boxing module 220 through the first conveying channel 141 to proceed with the next process (boxing).

Optionally, the plastic sealing quality inspection system 100 for a transparent substrate and an integrated inspection and sealing production line adopt a dual-channel control (they adopt different control modules 150 respectively), realizing seamless connection between the plastic sealing quality inspection and automatic operation of the production line. In addition, information interchange can be achieved between the plastic sealing quality inspection system 100 for a transparent substrate and the integrated inspection and sealing production line.

In the technical solution defined in the present application, the plastic sealing quality inspection system 100 for a transparent substrate can replace manual online operation, transform manual on-site monitoring into manual sampling inspection and fault handling. It has low dependence on manual labor, which helps save labor costs and improve work efficiency. In addition, the plastic sealing quality inspection system 100 for a transparent substrate has a high degree of automation and can meet the requirements of automated production.

In some embodiments, optionally, as shown in FIG. 2 and FIG. 3, the light source module 120 is an arc-shaped light source. The light source module 120 has a plurality of light-emitting areas 121, which emit light to the surfaces 211 to be inspected in sequence, and the number of the light-emitting areas 121 is a first numeric value. By configuring the light source module 120 as an arc-shaped light source, compared with linear light sources or point light sources, each light-emitting area 121 has a certain curvature, so the emitted light is more conducive to acquiring and inspecting images by the image acquisition module 130.Optionally, the first numeric value is 14, i.e., the light source module 120 comprises 14 light-emitting areas 121.

In some embodiments, optionally, when each light-emitting area 121 emits light to a surface 211 to be inspected, the image acquisition module 130acquires the inspection image of one surface 211 to be inspected. The image information comprises a plurality of inspection images. The number of inspection images is a first numeric value. The number of inspection images is consistent with the number of light-emitting areas 121. The plurality of light-emitting areas 121 emit light to the surfaces 211 to be inspected in sequence, and there are subtle differences between the inspection images acquired by the image acquisition module 130when each light-emitting area 121 emits light to a surface 211 to be inspected. By analyzing the plurality of inspection images, whether protrusions, and/or wrinkles, and/or damage are present on the surface 211 to be inspected can be determined, to determine whether the plastic sealing quality of the item 211 to be inspected is qualified.

In some embodiments, optionally, as shown in FIG. 4, the item 210 to be inspected is a cuboid with six surfaces 211 to be inspected. Through the mutual cooperation of the clamping module 110, the light source module 120, and the image acquisition module 130, image information acquisition is sequentially performed on the plurality of surfaces 211 to be inspected. Compared with the method for manually performing a six-side check on each item 210 to be inspected one by one, this plastic sealing quality inspection method helps save labor costs, improve work efficiency, and can further meet the requirements of automated production.

In some embodiment, optionally, as shown in FIG. 1, the plastic sealing quality inspection system 100 for a transparent substrate further comprises the frame body 160. Specifically, the frame body 160 is connected to the clamping module 110, the light source module 120, the image acquisition module 130, the conveying module 140, and the control module 150. For the clamping module 110, the light source module 120, the image acquisition module 130, the conveying module 140, and the control module 150, the frame body 160 mainly serves a function of a supporting and mounting carrier.

In some embodiments, optionally, the boxing module 220 is for boxing a plurality of items 210 to be inspected. In the case that the plastic sealing quality of the item 210 to be inspected does not have any defect or has an acceptable defect, the item 210 to be inspected enters the boxing module 220 through the first conveying channel 141to proceed with the next process (boxing).

In some embodiments, optionally, the thermoplastic sealing module 230 is for performing thermoplastic sealing on the items 210 to be inspected. In the case that the plastic sealing quality of the item 210 to be inspected has defects that are unacceptable, the item 210to be inspected enters a buffer channel (the second conveying channel 142), and after being unsealed, it re-enters the thermoplastic sealing module 230.

In some embodiments, optionally, the number of clamping modules 110 is at least two. The plastic sealing quality inspection system 100 for a transparent substrate comprises at least two inspection stations. By configuring at least two clamping modules 110, the item 210 to be inspected can complete rotating and lifting actions while passing different inspection stations sequentially, to cooperate with the image acquisition module 130 in acquiring image information for the plurality of surfaces 211 to be inspected.

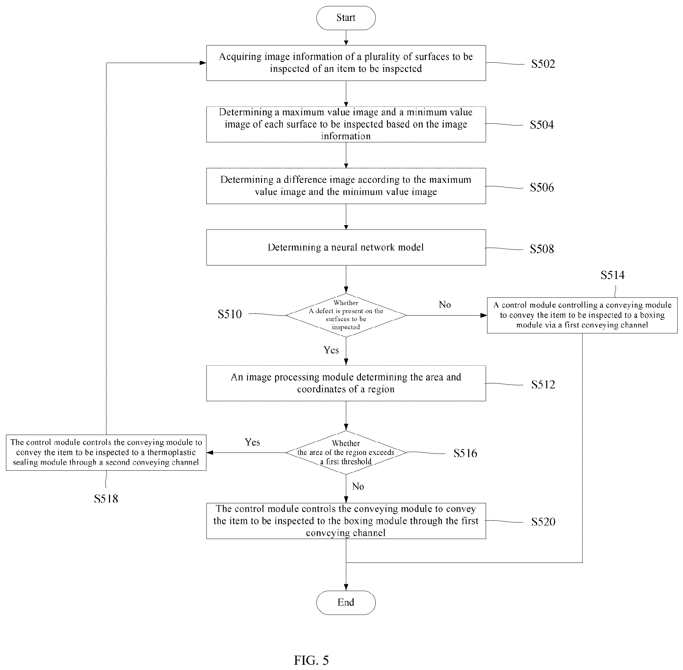

According to an embodiment of the present application, the plastic sealing quality inspection method for a transparent substrate is applied to the control module 150 of the plastic sealing quality inspection system 100 for a transparent substrate in any one of the above embodiments, and the plastic sealing quality inspection method for a transparent substrate is for performing inspection on the item 210 to be inspected. As shown in FIG. 5, the specific steps of the plastic sealing quality inspection method for a transparent substrate comprises:

S502, acquiring image information of a plurality of surfaces to be inspected of an item to be inspected. The image information comprises a plurality of inspection images. The plurality of light-emitting areas emit light to the surfaces to be inspected in sequence, and there are subtle differences between the inspection images acquired by the image acquisition module when each light-emitting area emits light to the surfaces to be inspected. By analyzing the plurality of inspection images, whether protrusions, and/or wrinkles, and/or damage are present on the surfaces to be inspected can be determined, to determine whether the plastic sealing quality of the item to be inspected is qualified.

S504, determining the maximum value image and minimum value image of each surface to be inspected based on the image information. The maximum value image of the surface to be inspected is the brightest area when the light-emitting area is activated. The minimum value image of the surface to be inspected is the image of the plastic sealing film under diffuse reflection. Within the same area of the surface to be inspected, the reflective brightness when there is a defect is different from the reflective brightness when there is not any defect.

S506, determining a difference image according to the maximum value image and the minimum value image. The difference image is obtained by subtracting the minimum value image from the maximum value image, to eliminate the image disturbed by information such as barcodes and intaglio printing.

S508, determining a neural network model. The neural network model is a YOLO (You Only Look Once) neural network model. Substituting the maximum value image, the minimum value image, and the difference image into the neural network model enables accurate location of the position and size of the defects. The image processing module employs a plurality of inspection algorithms, comprising a high-low value inspection algorithm and a neural network inspection algorithm. The high-low value inspection algorithm requires generating a standard high-value template and a low-value template for the maximum value image, the minimum value image, and the difference image of each surface to be inspected. The current inspection image is compared with the high-value template and the low-value template respectively, and if it exceeds a range, a defect is determined, and the position and size of the defect are counted according to a set statistical rule. The neural network inspection algorithm annotates and trains images of different defect areas. During inspection, segmentation is performed based on the trained neural network model to obtain the area and coordinates of the defective region.

S510, determining whether there is a defect on the surface to be inspected and generating a first determination result, based on the neural network model, the maximum value image, the minimum value image and the difference image. The defects comprise protrusions, and/or wrinkles, and/or damage. The defects comprise one or a combination of at least two of them.

S512, if the first determination result is positive, the image processing module determines the area and coordinates of the region; if the defects are present on the surface to be inspected, the image processing module determines the area and coordinates of the defective region to help the operator timely review.

S514, if the first determination result is negative, the control module controls the conveying module to convey the item to be inspected to the boxing module via the first conveying channel; if there is not any defect on the surface to be inspected, the control module controls the conveying module to convey the item to be inspected to the boxing module via the first conveying channel, to proceed with the next process (boxing).

S516, determining whether the area of the region exceeds a first threshold and generating a second determination result. The image processing module compares the area of the defective region with the first threshold to determine if the defect is within an acceptable range.

S518, if the second determination result is positive, the control module controls the conveying module to convey the item to be inspected to the thermoplastic sealing module through the second conveying channel; if the area of the defective region is greater than the first threshold, the control module controls the conveying module to convey the item to be inspected to the thermoplastic sealing module through the second conveying channel, to perform thermoplastic sealing on the item to be inspected again.

S520, if the second determination result is negative, the control module controls the conveying module to convey the item to be inspected to the boxing module through the first conveying channel; if the area of the defective region is not greater than the first threshold, the control module controls the conveying module to convey the item to be inspected to the boxing module through the first conveying channel, to proceed with the next process (boxing).

In the technical solution defined by the present application, in the process of conducting plastic sealing quality inspection for an item to be inspected, it has low dependence on manual labor, which helps save labor costs and improve work efficiency, and can meet the requirements of automated production.

In an embodiment of the present application, an electronic device comprises a processor, a memory, and programs or instructions which are stored in the memory and can run in the processor. When the programs or instructions are executed by the processor, the steps of the plastic sealing quality inspection method for a transparent substrate in the technical solution described above are realized.

In an embodiment of the present application, computer programs are stored in a computer-readable storage medium. When the computer programs are executed by a processor, the steps of the plastic sealing quality inspection method for a transparent substrate in the technical solution described above are realized.

In an embodiment of the present application, a chip comprises a processor and a communication interface, the communication interface is coupled to the processor, and the processor is configured to execute programs or instructions to realize the steps of the plastic sealing quality inspection method for a transparent substrate in the above technical solutions.

In the present application, the terms of "first", "second" and "third" are used only for the purpose of description and shall not be understood to indicate or imply any relative importance; the term of "a plurality of" indicates two or more, unless otherwise explicitly specified or defined. The terms of "mount", "connect with", "connect to", "fix" and the like should be understood in a broad sense, for example, the term "connect to" can be a fixed connection, a detachable connection, or an integral connection; the term "connect with" can be a direct connection or an indirect connection through an intermediate medium. For those of ordinary skills in the art, they may understand the specific meanings of the above-mentioned terms in the present application according to specific circumstances.

In the description of the present application, it should be indicated that the orientation or position relationships indicated by terms such as "upper", "lower", "left", "right", "front" and "rear" are based on the orientation or position relationships shown in the accompanying drawings, and are only for the convenience of describing the present application and simplifying the description, and do not indicate or imply that the indicated device or element must have a specific orientation or be constructed and operated in a specific orientation. Therefore, it shall not be construed as a limitation on the present application.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on made should be covered within the scope of protection of the present application.

## Claims

1. A plastic sealing quality inspection system for a transparent substrate, for inspecting an item (210) to be inspected, wherein the item (210) to be inspect has a plurality of surfaces (211) to be inspected, and the plastic sealing quality inspection system for a transparent substrate comprises:
a clamping module (110) for clamping the item (210) to be inspected to enable the item (210) to be inspected to rotate and/or lift;
a light source module (120) for emitting light to the surfaces (211) to be inspected;
an image acquisition module (130) for acquiring image information of the surfaces (211) to be inspected;
a conveying module (140) comprising a first conveying channel (141) and a second conveying channel (142), wherein the first conveying channel (141) is for connecting a boxing module (220), the second conveying channel (142) is for connecting a thermoplastic sealing module (230), the conveying module (140) is configured to convey the item (210) to be inspected to the boxing module (220) through the first conveying channel (141), or the conveying module (140) is configured to convey the item (210) to be inspected to the thermoplastic sealing module (230) through the second conveying channel (142);
a control module (150) connected to the clamping module (110), the light source module (120), the image acquisition module(130), and the conveying module (140), wherein the control module (150) comprises:
an image processing module (151)for receiving the image information, and the image processing module (151) determines, on the basis of the image information, a maximum value image and a minimum value image of each surface (211) to be inspected, then the image processing module (151) determines a difference image based on the maximum value image and the minimum value image, the image processing module (151) determines a neural network model, the image processing module (151) determines whether a defect is present on the surfaces (211) to be inspected based on the neural network model, the maximum value image, the minimum value image and the difference image and generates a first determination result; the defects comprise protrusions, and/or wrinkles, and/or damage; if the first determination result is positive, the image processing module (151) determines the area and coordinates of a region; if the first determination result is negative, the control module (150) controls the conveying module (140) to convey the item (210) to be inspected to the boxing module (220) through the first conveying channel (141);the image processing module (151) determines whether the area of the region exceeds a first threshold and generates a second determination result; if the second determination result is positive, the control module (150) controls the conveying module (140) to convey the item (210) to be inspected to the thermoplastic sealing module (230) through the second conveying channel (142); if the second determination result is negative, the control module (150) controls the conveying module (140) to convey the item (210) to be inspected to the boxing module (220) through the first conveying channel (141).

2. The plastic sealing quality inspection system for a transparent substrate according to claim 1, wherein the light source module (120) is an arc-shaped light source; the light source module (120) has a plurality of light-emitting areas (121), which emit light to the surfaces (211) to be inspected in sequence, and the number of the light-emitting areas (121) is a first numeric value.

3. The plastic sealing quality inspection system for a transparent substrate according to claim 2, wherein, when each light-emitting area (121) emits light to the surfaces (211) to be inspected, the image acquisition module (130) acquires an inspection image of one of the surfaces (211) to be inspected; the image information comprises a plurality of the inspection images; the number of the inspection images is a first numeric value.

4. The plastic sealing quality inspection system for a transparent substrate according to any one of claims 1 to 3, wherein, the item (210) to be inspected is a cuboid with six surfaces (211) to be inspected.

5. The plastic sealing quality inspection system for a transparent substrate according to any one of claims 1 to 3, further comprising:
a frame body (160) connected to the clamping module (110), the light source module (120), the image acquisition module (130), the conveying module (140) and the control module (150).

6. The plastic sealing quality inspection system for a transparent substrate according to any one of claims 1 to 3, wherein, the boxing module (220) is for boxing a plurality of the items (210) to be inspected.

7. The plastic sealing quality inspection system for a transparent substrate according to any one of claims 1 to 3, wherein, the thermoplastic sealing module (230) is for performing thermoplastic sealing on the items (210) to be inspected.

8. The plastic sealing quality inspection system for a transparent substrate according to any one of claims 1 to 3, wherein, the number of clamping modules (110) is at least two.

9. A plastic sealing quality inspection method for a transparent substrate, applied to the control module of the plastic sealing quality inspection system for a transparent substrate in any one of claims 1 to 8, and for inspecting an item to be inspected, and the plastic sealing quality inspection method for a transparent substrate comprises:
acquiring image information of a plurality of surfaces to be inspected of the item to be inspected;
determining, on the basis of the image information, a maximum value image and a minimum value image of each surface to be inspected;
determining a difference image based on the maximum value image and the minimum value image;
determining a neural network model;
determining whether a defect is present on the surfaces to be inspected based on the neural network model, the maximum value image, the minimum value image and the difference image and generating a first determination result, wherein the defects comprise protrusions, and/or wrinkles, and/or damage;
if the first determination result is positive, the image processing module determines the area and coordinates of a region;
if the first determination result is negative, the control module controls the conveying module to convey the item to be inspected to the boxing module through the first conveying channel;
determining whether the area of the region exceeds a first threshold and generating a second determination result;
if the second determination result is positive, the control module controls the conveying module to convey the item to be inspected to the thermoplastic sealing module through the second conveying channel;
if the second determination result is negative, the control module controls the conveying module to convey the item to be inspected to the boxing module through the first conveying channel.

10. An electronic device, comprising a processor, a memory, and programs or instructions which are stored in the memory and is configured to run in the processor, wherein, when the programs or instructions are executed by the processor, the steps of the plastic sealing quality inspection method for a transparent substrate in claim 9 are realized.

11. A computer-readable storage medium, wherein, computer programs are stored in the computer-readable storage medium; when the computer programs are executed by a processor, the steps of the plastic sealing quality inspection method for a transparent substrate in claim 9 are realized.

12. A chip, wherein, the chip comprises a processor and a communication interface, the communication interface is coupled to the processor, and the processor is configured to execute programs or instructions to realize the steps of the plastic sealing quality inspection method for a transparent substrate in claim 9.
